# FASCICULE DE BREVET EUROPEEN

(11) **EP 0 860 324 B1**
(45) Date de publication et mention de la délivrance du brevet: **16.06.1999**
(21) Numéro de dépôt: 98440022.6
(22) Date de dépôt: 10.02.1998
(51) Int. Cl.: B60R 1/06

(54) **Dispositif de fixation d'un rétroviseur extérieur sur un véhicule automobile**
Befestigungsvorrichtung für einen Aussenrückblickspiegel auf einem Kraftfahrzeug
Fixation device for an external rear view mirror on a motor vehicle

(30) Priorité: 20.02.1997 FR 9702189
(43) Date de publication de la demande: 26.08.1998
(73) Titulaire: MAGNETI MARELLI FRANCE, F-92000 Nanterre (FR)
(72) Inventeur: Brelot, Jean-Marc, 57400 Sarrebourg-Hoff (FR)
(74) Mandataire: Nuss, Pierre

(56) Documents cités:
- US-A- 2 999 663
- US-A- 4 253 633
- PATENT ABSTRACTS OF JAPAN vol. 6, no. 240 (M-174), 27 novembre 1982 & JP 57 138443 A (MURAKAMI), 26 août 1982,

## Description

La présente invention concerne le domaine des véhicules automobiles, en particulier de leurs accessoires, et notamment leurs rétroviseurs extérieurs, et a pour objet un dispositif de fixation d'un rétroviseur extérieur sur un véhicule automobile.

Les véhicules automobiles sont généralement équipés de deux rétroviseurs extérieurs fixés chacun sur une portière avant, de préférence dans un triangle de porte, au moyen d'une plaque de montage appropriée munie d'au moins une tige filetée, généralement deux ou trois, sur laquelle est serré un écrou.

Un tel montage est satisfaisant quant à la solution technique proposée et permet tous les types d'installations de rétroviseur.

Cependant, la fixation par vissage, qui est effectuée manuellement, induit d'importantes pertes de temps et, en corollaire, un effet négatif sur le prix de revient de l'ensemble. En outre, ces pertes de temps sont également gênantes lors des opérations de remplacement pour réparation ou des opérations de démontage liées au recyclage des produits en fin de vie d'un véhicule.

Par US-A-999 663, comportant les caractéristiques de préambule de la revendication 1, on connaît un dispositif de fixation d'un rétroviseur extérieur sur un véhicule, qui est constitué par un moyen de centrage solidaire de l'embase du boîtier de rétroviseur et traversant a élément de carrosserie. Ce moyen de centrage est pourvu d'a dispositif de blocage pivotant qui s'applique sous l'élément de carrosserie et est serré contre la face arrière de ce dernier par traction sur le moyen de centrage par l'intermédiaire d'une pièce vissée sur ce dernier et appliquant l'embase sur la face opposée de ladite carrosserie. Un tel dispositif ne permet pas une fixation et un serrage directs d'une embase sur un élément de carrosserie en une opération simple et rapide.

Par ailleurs, JP-A-57138443 décrit un dispositif de fixation d'un rétroviseur extérieur sur un véhicule, qui met en oeuvre un moyen de centrage solidaire de l'embase et traversant un trou de la carrosserie pour coopérer avec un moyen de centrage complémentaire s'appuyant sur la face opposée de ladite carrosserie et formant simultanément une plaque d'appui pour a ressort de blocage et de verrouillage destiné à coopérer avec un crochet de fixation de l'embase. Ce crochet est accroché, par son extrémité opposée à celle reliée au ressort, à un crochet solidaire de l'embase et sa liaison avec ledit crochet ou avec ledit ressort, après accrochage préalable de l'une ou l'autre extrémité opposée, ne peut s'effectuer qu'après compression dudit ressorts.

Un tel dispositif de fixation est donc particulièrement complexe et nécessite la mise en oeuvre de plusieurs pièces rapportées ne faisant pas partie intégrante de l'embase ou de la carrosserie.

La présente invention a pour but de pallier les inconvénients des dispositifs de montage de rétroviseurs extérieurs connus en proposant un dispositif de fixation d'un rétroviseur extérieur sur un véhicule automobile, permettant un montage et un démontage très rapides et très simples, directement sur l'élément de carrosserie correspondant.

A cet effet, le dispositif de fixation d'un rétroviseur extérieur sur un véhicule automobile, constitué par au moins un moyen de centrage solidaire de l'embase du boîtier de rétroviseur et traversant un moyen associé d'a élément de carrosserie, est caractérisé en ce que ledit moyen de centrage est pourvu d'un premier moyen de blocage par arc-boutement coopérant, en position de service, avec un deuxième moyen de blocage prévu directement dans l'élément de carrosserie.

L'invention sera mieux comprise, grâce à la description ci-après, qui se rapporte à des modes de réalisation préférés, donnés à titre d'exemples non limitatifs, et expliqués avec référence aux dessins schématiques annexés, dans lesquels :
la figure 1 est une vue partielle en coupe représentant le dispositif de fixation conforme à l'invention en position de service ;
la figure 2 est une vue partielle en coupe suivant A-A de la figure 1 ;
les figures 3 à 7 sont des vues analogues à celle de la figure 1, représentant les différentes phases de montage et de démontage du dispositif, et
la figure 8 est une vue analogue à celle de la figure 1, d'une variante de réalisation du dispositif.

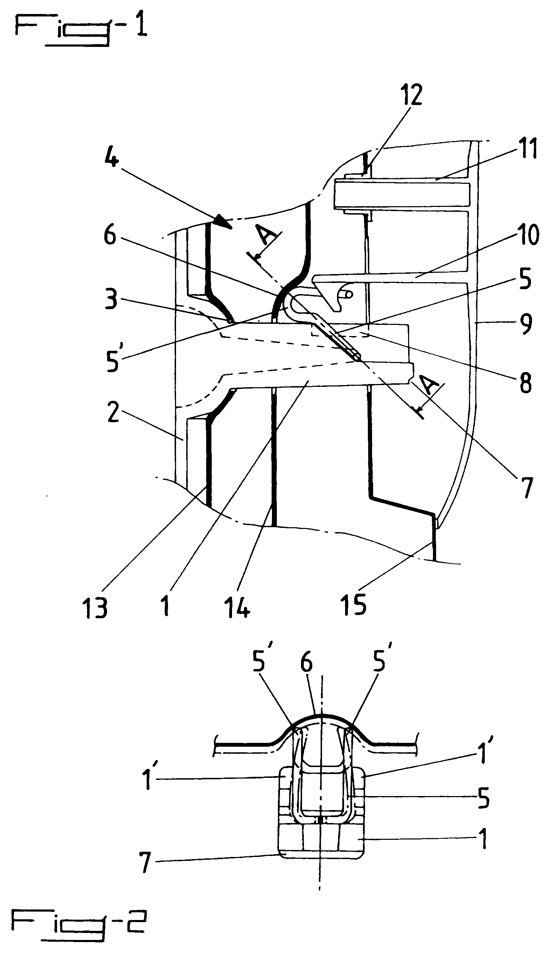

Conformément à l'invention et comme le montre plus particulièrement, à titre d'exemple, la figure 1 des dessins annexés, le dispositif de fixation d'un rétroviseur extérieur sur un véhicule automobile, constitué par au moins un moyen de centrage 1 solidaire de l'embase 2 du boîtier de rétroviseur et traversant un moyen associé 3 d'un élément de carrosserie 4, est caractérisé en ce que ledit moyen de centrage 1 est pourvu d'un premier moyen de blocage par arc-boutement 5 coopérant, en position de service, avec un deuxième moyen de blocage 6 prévu directement dans l'élément de carrosserie 4.

Le moyen de centrage 1 solidaire de l'embase 2 du boîtier de rétroviseur est avantageusement sous forme d'un canon de fixation moulé d'une seule pièce avec l'embase 2 et coopère avec le moyen associé 3, qui est sous forme d'un perçage de section correspondante d'un élément de carrosserie 4.

De préférence, le moyen de centrage 1 est formé par deux canons espacés sur l'embase 2, de manière à permettre un positionnement automatique de ladite embase 2 lors du montage. Une telle réalisation d'embase 2 avec moyen de centrage 1 est connue dans le domaine du montage des rétroviseurs sur les véhicules automobiles et n'est pas décrite plus en détail.

Le premier moyen de blocage 5 est monté à l'extrémité libre de l'un des canons formant le moyen de centrage 1 et est avantageusement constitué par un étrier élastique, dont les extrémités des ailes sont recourbées vers l'intérieur et montées avec possibilité de pivotement dans des perçages correspondants du canon formant le moyen de centrage 1, près de l'extrémité libre de ce dernier, lesdites ailes étant pliées en forme d'anse 5', à distance de l'âme et des extrémités des ailes.

Le deuxième moyen de blocage 6 prévu dans l'élément de carrosserie 4 se présente sous forme d'un logement concave incurvé, dont le rayon d'incurvation mesuré, en position de fixation du boîtier de rétroviseur, à partir des perçages du canon formant le moyen de centrage 1 destinés à la réception des extrémités des ailes du premier moyen de blocage 5, est légèrement inférieur à la distance entre lesdites extrémités et le sommet de l'anse formée sur l'étrier constituant ledit premier moyen de blocage 5.

En outre, le canon formant le moyen de centrage 1 recevant les extrémités des ailes de l'étrier canon formant le premier moyen de blocage 5 est pourvu de deux logements latéraux parallèles 1' de réception et de guidage des ailes de l'étrier, ces logements 1' formant simultanément butées de fin de course de blocage et de déblocage de l'étrier. Ainsi, l'étrier formant le premier moyen de blocage 5 est serré, d'une part, dans le logement concave incurvé formant le deuxième moyen de blocage 6 prévu dans l'élément de carrosserie 4 et, d'autre part, contre la butée correspondante formée par les logements 1', de sorte que le blocage et le verrouillage de l'ensemble sont obtenus par un effet d'arc-boutement dudit étrier. De plus, du fait même de la constitution en étrier du moyen 5, les deux ailes de ce dernier formant l'anse 5' peuvent se rapprocher élastiquement lors du blocage en position, de sorte que l'effet de blocage est renforcé.

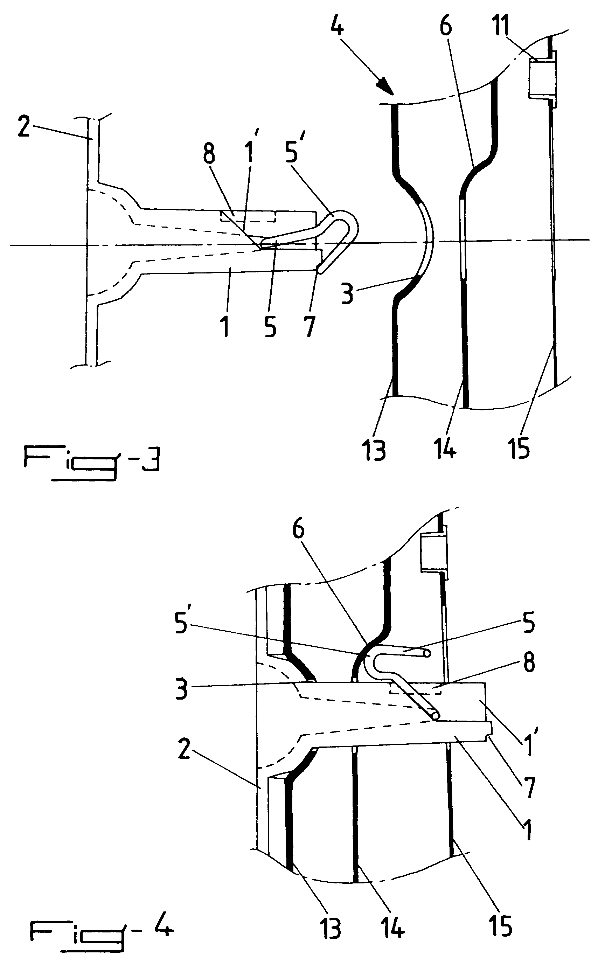

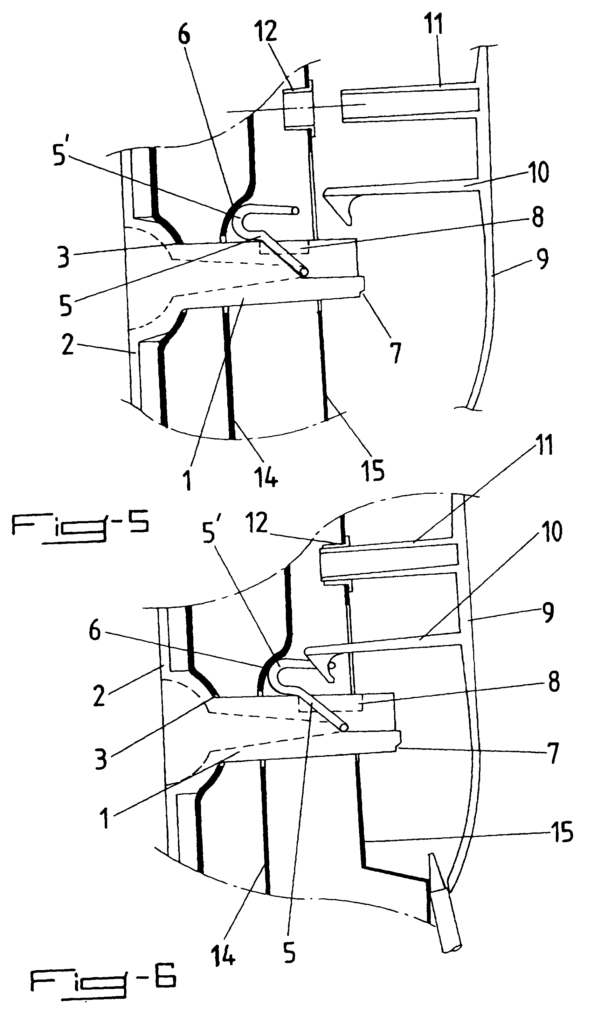

Conformément à une caractéristique de l'invention, l'extrémité libre du canon formant le moyen de centrage 1 est pourvue, sur sa face opposée à celle comportant les logements 1', d'un évidement transversal 7 de réception de l'âme de l'étrier formant le premier moyen de blocage 5, en position déverrouillée de montage de l'embase 2 (figure 3).

Selon une autre caractéristique de l'invention, le canon formant le moyen de centrage 1 est muni, en outre, sur sa face comportant les logements 1', entre lesdits logements 1', d'un évidement longitudinal 8 pour l'insertion d'un outil de montage et/ou de démontage. Un tel outil peut simplement être constitué par un tournevis ou analogue, dont la pointe insérée dans ledit évidement longitudinal 8 permet, par appui contre l'extrémité correspondante de l'évidement 8, de presser l'anse 5' de l'étrier formant le premier moyen de blocage 5 dans le logement concave incurvé formant le deuxième moyen de blocage 6 ou de la retirer de ce logement.

Conformément à une autre caractéristique de l'invention, le dispositif de fixation peut avantageusement coopérer avec un moyen 9 de recouvrement interne pourvu d'un dispositif de maintien 10 coopérant, en position de service, avec l'âme de l'étrier formant le premier moyen de blocage 5. De préférence, le dispositif de maintien 10 se présente sous forme d'un crochet, monté élastiquement sur la face interne du moyen de recouvrement 9 et s'enclenchant sous l'âme de l'étrier 5. De manière connue, le moyen 9 de recouvrement interne est avantageusement muni d'un ou de plusieurs éléments 11 de fixation par emboîtement dans des ouvertures 12 de section correspondante. Il est également possible de réaliser la fixation du moyen de recouvrement 9 par l'intermédiaire de vis l'appliquant sur la face interne de l'élément de carrosserie 4.

Les figures 1 à 7 des dessins annexés représentent le montage du dispositif sur une portière de véhicule automobile dite autoclave. Dans un tel cas, l'élément de carrosserie 4 correspondant est constitué par deux pièces distinctes, externe 13 et interne 14 formant, respectivement, le panneau externe et le renfort, la première étant pourvue du moyen de centrage associé 3 sous forme d'un perçage de section correspondante à celle du canon de fixation solidaire de l'embase 2 et la pièce interne étant munie du logement concave incurvé formant le deuxième moyen de blocage 6. Le panneau interne 15 recouvrant le renfort 14 est muni des ouvertures 12 de réception des éléments 11 de fixation du moyen de recouvrement 9.

La figure 8 des dessins annexés représente une variante de réalisation de l'invention adaptée au montage du dispositif sur une portière non autoclave. Dans un tel cas, le moyen de centrage associé 3 de l'élément de carrosserie 4 est confondu avec le logement concave incurvé formant le deuxième moyen de blocage 6, ces deux moyens étant constitués directement dans le renfort 14' solidaire du panneau interne 15'.

A cet effet, le canon formant le moyen de centrage 1 est avantageusement relié à l'embase 2 du boîtier de rétroviseur par l'intermédiaire d'une calotte concave 16 coopérant avec la face externe du logement concave incurvé formant le deuxième moyen de blocage 6. Ainsi, l'embase 2 peut être centrée sur cette face externe par passage du canon formant le moyen de centrage 1 à travers le perçage formant le moyen de centrage associé 3 de l'élément de carrosserie 4, puis l'étrier formant le premier moyen de blocage 5 peut être amené dans sa position représentée à la figure 8, dans laquelle il coopère avec le logement concave incurvé formant le deuxième moyen de blocage 6.

Dans ce mode de réalisation, le dispositif de fixation peut également coopérer avec un moyen 9 de recouvrement interne pourvu d'un dispositif de maintien 10 coopérant, en position de service, avec l'âme de l'étrier formant le premier moyen de blocage 5. Ce moyen de recouvrement sera alors fixé sur le panneau interne 15' par l'intermédiaire d'éléments de fixation analogue à ceux décrits à propos du mode de réalisation suivant les figures 1 à 7.

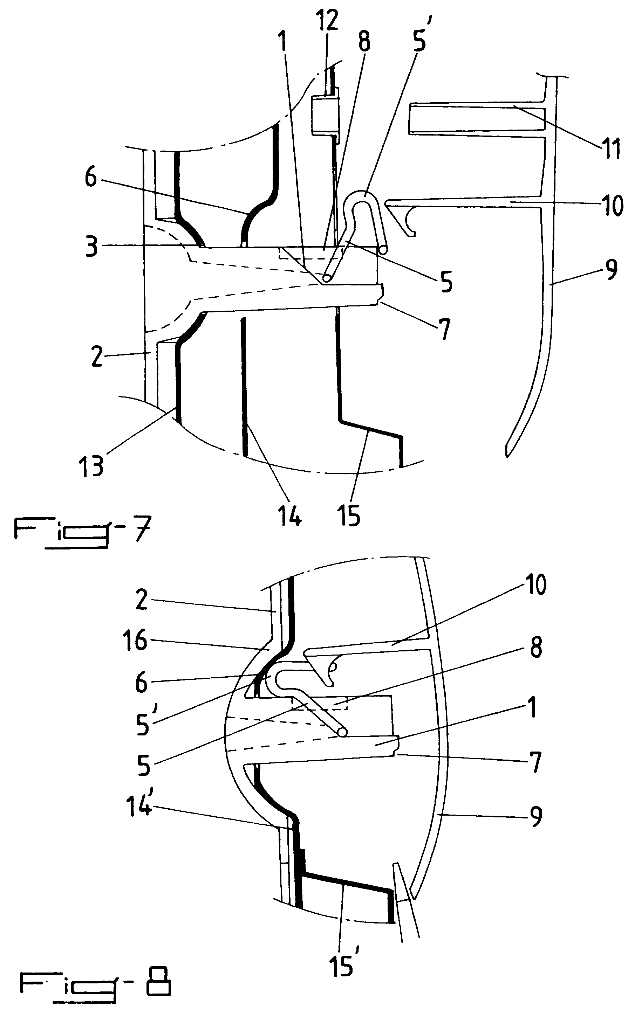

La mise en oeuvre du dispositif de fixation conforme à l'invention est expliquée ci-après avec référence aux figures 3 à 7. Le canon de l'embase 2 pourvu de l'étrier formant le premier moyen de blocage 5 est engagé dans le moyen de centrage associé 3 de l'élément de carrosserie 4, ledit étrier étant orienté vers l'avant et maintenu dans cette position par coopération de son âme avec l'évidement transversal 7 dudit canon (figure 3). Après insertion complète du canon dans le moyen 3, l'étrier 5 est pivoté dans sa position de verrouillage par déblocage préalable de son âme d'avec l'évidement 7, puis poussée de l'anse 5' dans le logement concave incurvé formant le deuxième moyen de blocage 6 au moyen d'un outil adapté coopérant par une extrémité avec l'évidement longitudinal 8 et s'appuyant contre l'âme de l'étrier 5 (figure 4).

Un moyen 9 de recouvrement interne pourvu d'un dispositif de maintien 10 peut alors être mis en place sur le panneau interne 15 et fixé à ce dernier par coopération de ses éléments 11 de fixation avec les ouvertures 12 prévues sur ledit panneau interne 15 (figure 5).

Pour réaliser le démontage du dispositif de fixation, il suffit de désolidariser le moyen 9 de recouvrement interne du panneau interne 15 par insertion d'un élément effilé, tel qu'une pointe de tournevis, entre le bord dudit moyen 9 et ledit panneau 15, ce qui a pour effet, du fait de l'engagement du crochet formant le dispositif de maintien 10 avec l'âme de l'étrier 5, d'entraîner ce dernier et de tirer l'anse 5' hors du logement concave incurvé formant le deuxième moyen de blocage 6 (figure 6). Il en résulte une libération du canon et la possibilité, après décrochage du crochet 10 hors de l'âme de l'étrier 5, de démonter totalement l'embase 2, l'étrier 5 se repliant en direction de l'extrémité du canon pour permettre le passage de ladite extrémité à travers le perçage formant le moyen de centrage associé 3 (figure 7).

Les opérations de montage et de démontage d'un dispositif suivant la figure 8 se déroulent de manière identique à celle décrite ci-dessus.

Grâce à l'invention, il est possible de réaliser un dispositif de fixation d'un rétroviseur extérieur sur un véhicule automobile de constitution simple et permettant un montage et un démontage simples et rapides avec un outillage courant. En outre le dispositif est facilement adaptable à une fixation sur une portière autoclave ou non autoclave

La présente invention est plus particulièrement applicable au montage de rétroviseurs extérieurs sur des portières de véhicules automobiles et permet un démontage rapide en cas de remplacement ou lors de la destruction du véhicule en fin de vie en vue du recyclage des matériaux.

## Revendications

1. Dispositif de fixation d'un rétroviseur extérieur sur un véhicule automobile caractérisé en ce qu'il est essentiellement constitué par au moins un moyen de centrage (1) solidaire de l'embase (2) du boîtier de rétroviseur et coopérant avec un moyen associé (3) d'un élément de carrosserie (4), cedit moyen de centrage (1) étant pourvu d'un premier moyen de blocage (5) coopérant, en position de service, avec un deuxième moyen de blocage (6) prévu dans l'élément de carrosserie (4).

2. Dispositif de fixation, suivant la revendication 1, caractérisé en ce que le moyen de centrage (1) solidaire de l'embase (2) du boîtier de rétroviseur est avantageusement sous forme d'un canon de fixation moulé d'une seule pièce avec l'embase (2) et coopère avec le moyen associé (3), qui est sous forme d'un perçage de section correspondante d'un élément de carrosserie (4).

3. Dispositif de fixation, suivant l'une quelconque des revendications 1 et 2, caractérisé en ce que le premier moyen de blocage (5) est monté à l'extrémité libre de l'un des canons formant le moyen de centrage (1) et est constitué par un étrier élastique, dont les extrémités des ailes sont recourbées vers l'intérieur et montées avec possibilité de pivotement dans des perçages correspondants du canon formant le moyen de centrage (1), près de l'extrémité libre de ce dernier, lesdites ailes étant pliées en forme d'anse (5'), à distance de l'âme et des extrémités des ailes.

4. Dispositif de fixation, suivant l'une quelconque des revendications 1 à 3, caractérisé en ce que le deuxième moyen de blocage (6) prévu dans l'élément de carrosserie (4) se présente sous forme d'un logement concave incurvé, dont le rayon d'incurvation mesuré, en position de fixation du boîtier de rétroviseur, à partir des perçages du canon formant le moyen de centrage (1) destinés à la réception des extrémités des ailes du premier moyen de blocage (5), est légèrement inférieur à la distance entre lesdites extrémités et le sommet de l'anse formée sur l'étrier constituant ledit premier moyen de blocage (5).

5. Dispositif de fixation, suivant l'une quelconque des revendications 1 à 4, caractérisé en ce que le canon formant le moyen de centrage (1) recevant les extrémités des ailes de l'étrier canon formant le premier moyen de blocage (5) est pourvu de deux logements latéraux parallèles (1') de réception et de guidage des ailes de l'étrier, ces logements (1') formant simultanément butées de fin de course de blocage et de déblocage de l'étrier.

6. Dispositif de fixation, suivant l'une quelconque des revendications 1 à 5, caractérisé en ce que l'extrémité libre du canon formant le moyen de centrage (1) est pourvue, sur sa face opposée à celle comportant les logements (1'), d'un évidement transversal (7) de réception de l'âme de l'étrier formant le premier moyen de blocage (5), en position déverrouillée de montage de l'embase (2).

7. Dispositif de fixation, suivant l'une quelconque des revendications 1 à 6, caractérisé en ce que le canon formant le moyen de centrage (1) est muni, en outre, sur sa face comportant les logements (1'), entre lesdits logements (1'), d'un évidement longitudinal (8) pour l'insertion d'un outil de montage et/ou de démontage.

8. Dispositif de fixation, suivant l'une quelconque des revendications 1 à 7, caractérisé en ce qu'il coopère avec un moyen (9) de recouvrement interne pourvu d'un dispositif de maintien (10) coopérant, en position de service, avec l'âme de l'étrier formant le premier moyen de blocage (5).

9. Dispositif de fixation, suivant la revendication 8, caractérisé en ce que le dispositif de maintien (10) se présente sous forme d'un crochet, monté élastiquement sur la face interne du moyen de recouvrement (9) et s'enclenchant sous l'âme de l'étrier (5).

10. Dispositif de fixation, suivant l'une quelconque des revendications 1, 2 et 4, caractérisé en ce que l'élément de carrosserie (4) est constitué par deux pièces distinctes, externe (13) et interne (14) formant, respectivement, le panneau externe et le renfort, la première étant pourvue du moyen de centrage associé (3) sous forme d'un perçage de section correspondante à celle du canon de fixation solidaire de l'embase (2) et la pièce interne étant munie du logement concave incurvé formant le deuxième moyen de blocage (6).

11. Dispositif de fixation, suivant l'une quelconque des revendications 1, 2 et 4, caractérisé en ce que le moyen de centrage associé (3) de l'élément de carrosserie (4) est confondu avec le logement concave incurvé formant le deuxième moyen de blocage (6), ces deux moyens étant constitués directement dans le renfort (14') solidaire du panneau interne (15').

12. Dispositif de fixation, suivant la revendication 11, caractérisé en ce que le canon formant le moyen de centrage (1) est avantageusement relié à l'embase (2) du boîtier de rétroviseur par l'intermédiaire d'une calotte concave (16) coopérant avec la face externe du logement concave incurvé formant le deuxième moyen de blocage (6).

## Claims

1. A device for fastening an outer rear mirror to a motor vehicle, comprising at least one centring means (1) secured to the base (2) of the mirror casing and extending through an associated means (3) forming part of a body element (4), characterized in that the centring means (1) is provided with a first bracing and locking means (5) which, in the operative position, co-operates with a second locking means (6) disposed directly in the body element (4).

2. A fastening device according to claim 1, characterized in that the centring means (1) secured to the base (2) of the mirror casing is advantageously in the form of a fastening bush moulded in one piece with the base (2) and co-operates with the associated means (3), which is in the form of an orifice of corresponding cross-section in a body element (4).

3. A fastening device according to claim 1 or 2, characterised in that the first locking means (5) is mounted at the projecting end of one of the bushes forming the centring means (1) and comprises a resilient stirrup, the ends of the arms whereof are bent towards the interior and mounted so as to be pivotable in the corresponding orifices in the bush forming the centring means (1) near the projecting end thereof, the arms being folded in the shape of a handle (5') at a distance from the core and from the ends of the arms.

4. A fastening device according to any of claims 1 to 3, characterized in that the second locking means (6) disposed in the body element (4) is in the form of a curved concave recess having a radius of curvature which when measured, in the position for fastening the mirror casing, from the orifices in the bush forming the centring means (1) for receiving the ends of the arms of the first locking means (5), is slightly less than the distance between the said ends and the tip of the handle formed on the stirrup constituting the first locking means (5).

5. A fastening device according to any of claims 1 to 4, characterised in that the bush forming the centring means (1) receiving the ends of the arms of the bush stirrup forming the first locking means (5) is provided with two parallel side recesses (1') for receiving and guiding the arms of the stirrup, the recesses (1') also forming end of travel abutments for locking and unlocking the stirrup.

6. A fastening device according to any of claims 1 to 5, characterised in that the projecting end of the bush forming the centring means (1) is provided, on its surface remote from the surface comprising the recesses (1'), with a transverse cavity (7) for receiving the core of the stirrup forming the first locking means (5), when in the unlocked position for fitting the base (2).

7. A fastening device according to any of claims 1 to 6, characterised in that the bush forming the centring means (1) is also provided, on its surface comprising the recesses (1'), with a longitudinal cavity (8) between the recesses (1') for inserting an assembly tool and/or a dismantling tool.

8. A fastening device according to any of claims 1 to 7, characterised in that it co-operates with an internal covering means (9) provided with a retaining device (10) co-operating, in the operative position, with the core of the stirrup forming the first locking means (5).

9. A fastening device according to claim 8, characterised in that the retaining device (10) is in the form of a catch resiliently mounted on the inner surface of the covering means (9) and engaging under the core of the stirrup (5).

10. A fastening device according to any of claims 1, 2 and 4, characterised in that the body element (4) is made up of two separate parts, an outer part (13) forming the outer panel and an inner part (14) forming the reinforcement, the first part being provided with the associated centring means (3) in the form of an orifice having a cross-section corresponding to that of the fastening bush secured to the base (2), and the inner part being formed with the curved concave recess forming the second locking means (6).

11. A fastening device according to any of claims 1, 2 and 4, characterised in that the associated centring means (3) of the body element (4) is merged with the curved concave recess forming the second locking means (6), the two means being formed directly in the reinforcement (14') secured to the inner panel (15').

12. A fastening device according to claim 11, characterised in that the bush forming the centring means (1) is advantageously connected to the base (2) of the mirror casing via a concave cap (16) co-operating with the outer surface of the curved concave recess forming the second locking means (6).

## Patentansprüche

1. Befestigungsvorrichtung für einen Außenrückspiegel an einem Kraftfahrzeug, bestehend aus wenigstens einer mit dem Sockel (2) des Rückspiegelgehäuses verbundenen Zentriereinrichtung (1), die ein zugeordnetes Teil (3) eines Karosserieelements (4) durchquert, **dadurch gekennzeichnet,** daß die Zentriereinrichtung (1) eine erste Einrichtung (5) zum Blockieren durch Verklemmen aufweist, die in der Gebrauchsstellung mit einer zweiten, im Karosserieelement (4) direkt angeordneten Blockiereinrichtung (6) zusammenwirkt.

2. Befestigungsvorrichtung nach Anspruch 1, **dadurch gekennzeichnet,** daß die mit dem Sockel (2) des Rückspiegelgehäuses verbundene Zentriereinrichtung (1) vorteilhafterweise als Befestigungsdorn ausgebildet ist, der einstückig mit dem Sockel (2) geformt ist und mit dem in Form einer mit entsprechendem Querschnitt hergestellten Bohrung eines Karosserieelements (4) ausgebildeten, zugeordneten Teil (3) zusammenwirkt.

3. Befestigungsvorrichtung nach Anspruch 1 oder 2, **dadurch gekennzeichnet,** daß die erste Blockiereinrichtung (5) am freien Ende eines die Zentriereinrichtung (1) bildenden Dorns angeordnet ist und aus einem elastischen Bügel besteht, dessen Schenkelenden nach innen gebogen und schwenkbar, in entsprechenden Bohrungen des die Zentriereinrichtung (1) bildenden Dorns in der Nahe seines freien Endes angeordnet sind, wobei die Schenkel in zum Steg und zu den Schenkelenden beabstandeten Bereichen bügelförmig (5') umgebogen sind.

4. Befestigungsvorrichtung nach einem Ansprüche 1 bis 3, **dadurch gekennzeichnet,** daß die zweite, im Karosserieelement (4) vorgesehene Blockiereinrichtung (6) als konkaver, gebogener Sitz ausgebildet ist, dessen in der Befestigungsstellung des Rückspiegelgehäuses, ausgehend von den die Schenkelenden der ersten Blockiereinrichtung (5) aufnehmenden Bohrungen des die Zentriereinrichtung (1) bildenden Dorns gemessener Krümmungsradius etwas kleiner als der Abstand zwischen den Schenkelenden und dem Scheitel des am die erste Blockiereinrichtung (5) bildenden Bügels angeformten Bogens ist.

5. Befestigungsvorrichtung nach einem der Ansprüche 1 bis 4, **dadurch gekennzeichnet,** daß der die Zentriereinrichtung (1) bildende, die Schenkelenden des die erste Blockiereinrichtung (5) bildenden Bügels aufnehmende Dorn zwei seitliche, parallele Vertiefungen (1') zum Aufnehmen und Führen der Bügelschenkel aufweist, die gleichzeitig Endanschläge beim Blockieren und Lösen des Bügels bilden.

6. Befestigungsvorrichtung nach einem der Ansprüche 1 bis 5, **dadurch gekennzeichnet,** daß das freie Ende des die Zentriereinrichtung (1) bildenden Dorns auf seiner der die Vertiefung (1') aufnehmenden Seite gegenüberliegenden Seite eine Quervertiefung (7) zur Aufnahme des Steges des die erste Blockiereinrichtung (5) bildenden Bügels in der entriegelten Montagesteilung des Sockels (2) aufweist.

7. Befestigungsvorrichtung nach einem der Ansprüche 1 bis 6, **dadurch gekennzeichnet,** daß der die Zentriereinrichtung (1) bildende Dorn zusätzlich mit einer Längsvertiefung (8) zum Einsetzen eines Montage- und/oder Demontagewerkzeuges auf der Seite mit den Vertiefungen (1') und zwischen denselben versehen ist.

8. Befestigungsvorrichtung nach einem der Ansprüche 1 bis 7, **dadurch gekennzeichnet,** daß sie mit einer inneren Abdeckung (9) Zusammenwirkt, die mit einem Halteelement (10) versehen ist, das in der Betriebsstellung mit dem Steg des die erste Blockiereinrichtung (5) bildenden Bügels zusammenwirkt.

9. Befestigungsvorrichtung nach Anspruch 8, **dadurch gekennzeichnet,** daß das Halteelement (10) als Haken ausgebildet ist, der elastisch an der Innenfläche der inneren Abdeckung (9) befestigt ist und den Steg des Bügels (5) hintergreift.

10. Befestigungsvorrichtung nach einem der Ansprüche 1, 2 und 4, **dadurch gekennzeichnet,** daß das Karosserieelement (4) aus zwei unterschiedlichen inneren und äußeren Teilen (13, 14) gebildet ist, die jeweils die äußere Fläche und die Verstärkung bilden, wobei das erste das zugeordnete Zentrierteil (3) in Form einer Bohrung mit einem dem des am Sockel befestigten Dorns entsprechenden Durchmesser aufweist und das Innenteil mit dem die zweite Blockiereinrichtung (6) bildenden konkaven, gebogenen Sitz versehen ist.

11. Befestigungsvorrichtung nach einem der Ansprüche 1, 2 und 4, **dadurch gekennzeichnet,** daß das zugeordnete Zentrierteil (3) des Karosserieelements (4) mit dem die zweite Blockiereinrichtung (6) bildenden konkaven, gebogenen Sitz zusammenfällt und diese beiden Teile direkt in der an der inneren Türtafel (14') befestigten Verstärkung (15') ausgebildet sind.

12. Befestigungsvorrichtung nach Anspruch 11, **dadurch gekennzeichnet,** daß der die Zentriereinrichtung (1) bildende Dorn vorteilhafterweise mit dem Sockel (2) des Rückspiegelgehäuses über eine mit der Außenfläche des die zweite Blockiereinrichtung (6) bildenden konkaven, gebogenen Sitzes zusammenwirkenden, konkaven Kalotte (16) verbunden ist.
